# EUROPÄISCHE PATENTSCHRIFT

(11) **EP 1 179 560 B1**
(45) Veröffentlichungstag und Bekanntmachung des Hinweises auf die Patenterteilung: **02.04.2003**
(21) Anmeldenummer: 00115852.6
(22) Anmeldetag: 24.07.2000
(51) Int. Cl.: C08K 5/01, C08K 5/103, C08L 21/00

(54) **Kautschukmischung**
Rubber composition
Composition de caoutchouc

(43) Veröffentlichungstag der Anmeldung: 13.02.2002
(73) Patentinhaber: Continental Aktiengesellschaft, 30165 Hannover (DE)
(72) Erfinder: Söhnen, Dietmar, Dr., 31867 Lauenau (DE); Russell, Richard, Dr., 4731 Eynatten (BE)

(56) Entgegenhaltungen:
- EP-A- 0 524 164
- EP-A- 0 799 726
- EP-A- 0 831 123

## Beschreibung

Die Erfindung betrifft eine schwefelvernetzbare Kautschukmischung ohne aromatische Prozessöle enthaltend zumindest ein Dienelastomer, als Füllstoffe zumindest feinverteilte, gefällte Kieselsäure und Ruß, Weichmacher, zumindest ein Silan-Kupplungsagens sowie weitere übliche Zusatzstoffe. Ferner betrifft die Erfindung ein Verfahren zur Herstellung der Kautschukmischung sowie Gummiprodukte und Reifen auf Basis dieser Kautschukmischung.

Es ist bekannt, Natur- und Synthesekautschuken sowie deren Kautschukmischungen Weichmacher zuzusetzen, um die Viskosität herabzusetzen und die Verarbeitbarkeit zu verbessern. Zu diesem Zweck können bevorzugt im Handel erhältliche Produkte in Form von aromatischen Petroleumraffinaten (aromatische Prozessöle) eingesetzt werden. Derartige aromatische Öle ermöglichen zum einen durch ihre viskositäts- und/oder härtemindernde Wirkung eine Verbesserung der Verarbeitbarkeit der hochviskosen, unvulkanisierten Mischungsbestandteile, zum anderen reduzieren sie die Härte, den Spannungswert im Zugversuch (Modul) und die Elastiziät der Vulkanisationsprodukte. Diese Produkte haben jedoch die nachteilige Eigenschaft, dass sie bei längerem Kontakt mit Oberflächen anderer Objekte, wie z. B. Bodenflächen, in einem mehr oder weniger großem Umfang braune bis schwarze, z. T. ölige Flecken auf der Oberfläche hinterlassen. Diese Flecken sind z. B. an den Lagerorten von Reifen, Transportbändern, Antriebsriemen, Dichtungen, Schläuchen, Schuhsohlen und anderen Gummiprodukten zu beobachten. Die Entfernung dieser Flecken ist kaum zu bewerkstelligen. Außerdem haben die Vulkanisationsprodukte mit aromatischen Prozessölen, die in der Regel Ruß als Füllstoff aufweisen, den Nachteil, dass sie schwarze Markierungen durch Abrieb auf Oberflächen von Objekten zurücklassen, wie sie z. B. auf Landebahnen von Flughäfen hervorgerufen durch den Abrieb der Flugzeugreifen deutlich sichtbar sind.

Um nicht abfärbende Vulkanisate herzustellen, deren physikalische Eigenschaften durch den verwendten Weichmacher nicht beeinträchtigt werden, wurde in der DE 39 41 246 A1 vorgeschlagen, in Ruß enthaltenden Kautschukmischungen Weichmacher einzusetzen, die ausgewählt sind aus Estern (z. B. Dioctylphthalat), naphthenischen Ölen, paraffinischen Ölen oder deren Gemischen, und ferner ein flüssiges Polymer (z. B. flüssiges Polyisopren) und/oder Asphaltene zuzusetzen. Diese Vulkanisate weisen aber noch den Nachteil auf, dass sie schwarze Markierungen durch Abrieb auf Oberflächen hinterlassen. Außerdem ergeben sich bei derartigen Kautschukmischungen Verarbeitungsprobleme. Die speziellen Mischungsbestandteile lassen sich nur schwer homogen einmischen und man beobachtet ölige Ausschwitzungen an den Vulkanisaten.

In der EP 0 708 137 A1 werden Vulkanisate beschrieben, die die Nachteile des Auftretens der scharzen Markierungen durch Abrieb und der dunklen Verfärbung von Oberflächen durch längeren Kontakt des Vulkanisats mit diesen Oberflächen nicht aufweisen sollen. Dazu wird vorgeschlagen, dass die Kautschukmischung keine aromatischen Prozessöle enthält, aber wenigstens einen Weichmacher (z. B. Dioctylphthalat), flüssiges Polymer und/oder Asphaltene und als Füllstoff Kieselsäure und Ruß im Volumenverhältnis 1:1 bis 20:1 aufweist. Auch bei dieser Kautschukmischung treten Probleme in der Verarbeitung auf, man kann nur schwer vollständig homogen einmischen und auch hier kann man an den Vulkanisaten ölige Ausschwitzungen beobachten. Für Phthalat-Weichmacher vermutet man zudem eine ökologische bzw. gesundheitliche Bedenklichkeit. Außerdem sind die in der EP 0 708 137 A1 vorgeschlagenen flüssigen Polymere derzeit kaum in großen Mengen verfügbar und im Preis hoch. Es gibt derzeit auch nur wenige Polymertypen in flüssiger Form, z. B. Polyisopren.

Der vorliegenden Erfindung liegt nun die Aufgabe zugrunde, eine schwefelvernetzbare Kautschukmischung bereitzustellen, die sich gut verarbeiten und mischen lässt und deren Vulkanisate die Nachteile des Auftretens der schwarzen Markierungen durch Abrieb und der dunklen Verfärbungen von Oberflächen durch längeren Kontakt des Vulkanisats mit diesen Oberflächen nicht aufweisen. Gleichzeitig sollen die Vulkanisationsprodukte (Gummiprodukte), beispielsweise Reifen mit einem Laufstreifen aus der Mischung, gegenüber den Produkten aus bekannten Kautschukmischungen keine Nachteile in den physikalischen Eigenschaften aufweisen.

Gelöst wird diese Aufgabe durch eine schwefelvernetzbare Kautschukmischung ohne aromatische Prozessöle,
- die als Weichmacher 5 bis 60 phr zumindest eines Mineralölweichmachers, der einen Gehalt an polycyclischen aromatischen Verbindungen bestimmt mit dem DMSO-Extrakt nach der IP 346 Methode von weniger als 3 Gew.-% bezogen auf das Gesamtgewicht des Mineralölweichmachers und eine Glasübergangstemperatur unterhalb von -45 °C aufweist, und 1 bis 20 phr zumindest eines Glycerids und/oder eines Faktis enthält und
- in der das Gewichtsverhältnis von feinverteilter, gefällter Kieselsäure zu Ruß 1:2 bis 20:1 beträgt.

Die in dieser Schrift verwendete Angabe phr (parts per hundred parts of rubber by weight) ist die in der Kautschukindustrie übliche Mengenangabe für Mischungen. Die Dosierung der Gewichtsteile der einzelnen Substanzen wird dabei stets auf 100 Gewichtsteile der Gesamtkautschukmasse bezogen.

Unter aromatischen Prozessölen versteht man Mineralölweichmacher, die gemäß ASTM D 2140 über 25 %, vorzugsweise über 35 %, aromatische Bestandteile (C_{A}), weniger als 45 % naphthenische (C_{N}) und weniger als 45 % paraffinische (C_{P}) Bestandteile enthalten. Die Viskositäts-Dichte-Konstante gemäß ASTM D 2140 (VDK) von aromatischen Prozessölen ist größer als 0,9. Ferner werden die aromatischen Prozessöle nach ASTM D 2226 klassifiziert in Öltyp 101 und 102.

Die polycyclischen aromatischen Verbindungen umfassen aromatische Kohlenwasserstoffe, die mehr als drei kondensierte aromatische Ringe enthalten, und die davon abgeleiteten heterocyclischen Verbindungen mit Schwefel- und/oder Stickstoff. Die Ringe können mit kurzen Alkyl- oder Cycloalkylgruppen substituiert sein.

Faktisse sind Umsetzungsprodukte bzw. Vernetzungsprodukte ungesättigter tierischer, pflanzlicher oder synthetischer Öle (z. B. Rapsöl oder Rizinusöl) mit Schwefel, Schwefelwasserstoff, Dischwefelchlorid, Siliciumtetrachlorid oder Diisocyanat. Für weitere Einzelheiten sei beispielhaft auf J. Schnetger, Lexikon der Kautschuk-Technik, Hüthig Buch Verlag, 2. Aufl., Heidelberg, 1991 verwiesen.

Es war überraschend festzustellen, dass eine derartige Kombination von dem speziellen Mineralölweichmacher mit einem Glycerid und/oder einem Faktis und dem Verhältnis von Kieselsäure zu Ruß in schwefelvernetzbaren Kautschukmischungen ohne aromatische Prozessöle sich problemlos verarbeiten und mischen lässt und gleichzeitig die Vulkanisate aus diesen Mischungen nicht die unerwünschten Markierungen durch Abrieb und Fleckenbildung zeigen. Die physikalischen Eigenschaften der Vulkanisate bzw. Vulkanisationsprodukte werden nicht nachteilig beeinflusst, zum Teil werden sie sogar deutlich verbessert. Verbesserungen kann man z. B. bei dem Rollwiderstand, den Wintereigenschaften, dem Nassgriff und dem Trockenbremsen von Reifen feststellen, deren Laufstreifen die vulkanisierte Kautschukmischung enthalten. Überraschenderweise kann durch die spezielle erfindungsgemäße Kombination von Mineralölweichmacher mit Glycerid und/oder Faktis und dem Verhältnis an Kieselsäure zu Ruß erreicht werden, dass die Verschlechterung des Nassgriffs durch die Verwendung eines Öles mit einer niedrigen Glasübergangstemperatur, wie sie im Allgemeinen mit einer Absenkung der Glasübergangstemperatur der Mischung einhergeht, nicht eintritt. Und die anderen positiven Eigenschaften, die aus einer niedrigen Glasübergangstemperatur der Mischung resultieren, wie z. B. ein niedriger Rollwiderstand, gute Wintereigenschaften und gutes Trockenbremsen (mit und ohne ABS), bleiben trotzdem erhalten oder werden sogar noch verbessert.
Zusätzlich bieten die verwendeten Weichmacher im Vergleich mit Phthalat-Weichmachern den Vorteil, dass sie unbedenklich für Umwelt und Gesundheit sind. Zudem sind sie kommerziell verfügbar.
Bei mehr als 20 phr Glycerid und/oder Faktis in der Mischung hat man den Nachteil, dass Unverträglichkeiten zwischen dem Glycerid bzw. Faktis und dem Kautschuk auftreten.

Als Mineralölweichmacher, deren Gehalte an polycyclischen aromatischen Verbindungen (PCA-Gehalt) bestimmt mit dem DMSO-Extrakt nach der IP 346 Methode von weniger als 3 Gew.-% bezogen auf das Gesamtgewicht des Mineralölweichmachers betragen und deren Glasübergangstemperaturen unterhalb von -45 °C liegen, können grundsätzlich alle dem Fachmann bekannten Mineralölweichmacher benutzt werden, die diese Werte erfüllen. Derartige Mineralölweichmacher sind z. B. MES (mild extraction solvate), die durch Solvent-Extraktion von Schweröldestillaten oder durch Behandlung von Schweröldestillaten mit Wasserstoff in Anwesenheit eines Katalysators (Hydrierung) erhalten werden und wegen derzeit höherer Verfügbarkeit bevorzugt in der erfindungsgemäßen Kautschukmischung eingesetzt werden, oder TDAE (treated destillate aromatic extract). Hinsichtlich dieser Mineralölweichmacher sei in diesem Zusammenhang exemplarisch auf V. Null, "Safe Process Oils for Tires with Low Environmental Impact", Kautschuk Gummi Kunststoffe, 12/1999, S. 799-805 verwiesen. Die Verwendung derartiger Mineralölweichmacher in Kautschukmischungen ist z. B. auch aus der EP 0 940 462 A2 bekannt.

Es werden vorzugsweise Mineralölweichmacher eingesetzt, die folgende Eigenschaften aufweisen:

| | |
|---|---|
| PCA-Gehalt | maximal 2,90 Gew.-% (gemäß IP 346) |
| Glasübergangstemperatur | -58 ± 3 °C (gemäß ASTM E 1356) |
| Dichte bei 15 °C | 907 kg/m ³ (gemäß ASTM D 4502) |
| Pourpoint (Stockpunkt) | 3 °C (gemäß ASTM D 97) |
| Viskosität bei 40 °C | 200 ± 30 mm ² /s (gemäß ASTM D 445) |
| Viskosität bei 100 °C | 15 ± 2 mm ² /s (gemäß ASTM D 445) |
| Brechungsindex bei 20 °C | 1,500 ± 0,005 (gemäß ASTM D 2159) |
| Viskositäts-Dichte-Konstante | 0,845 ± 0,020 (gemäß ASTM D 2140) |
| Schwefelgehalt | 1,0 Gew.-% (gemäß ASTM D 2822) |
| Gehalt an Kohlenwasserstoffen | |
| aromatisch C _{A} | 11-17 % (gemäß ASTM D 2140) |
| naphthenisch C _{N} | 25-32 % (gemäß ASTM D 2140) |
| paraffinisch C _{P} | 54-68 % (gemäß ASTM D 2140) |
| Flammpunkt | mindestens 220 °C (gemäß ASTM D 92) |
| Wassergehalt | 0,5 % (gemäß ASTM D 6304-98a) |

Als Weichmacher kann z. B. das Handelsprodukt Catenex® SNR der Deutschen Shell AG verwendet werden.

Die erfindungsgemäße Kautschukmischung enthält als weiteren Weichmacher zumindest ein Glycerid, einen Ester des Glycerins, und/oder ein Faktis. Bevorzugt ist, wenn als Glycerid natürliche Triglyceride pflanzlichen oder tierischen Ursprungs verwendet werden, die umweltfreundlich sind. Vorteilhafterweise wird preiswertes Rapsöl verwendet, welches sich besonders gut verarbeiten lässt.

Die schwefelvernetzbare Kautschukmischung enthält zumindest ein Dienelastomer. Dienelastomere sind alle Kautschuke mit einer ungesättigten Kohlenstoffkette, die sich zumindest teilweise von konjugierten Dienen ableiten. Besonders bevorzugt ist, wenn das Dienelastomer bzw. die Dienelastomere in der Kautschukmischung ausgewählt sind aus der Gruppe bestehend aus Naturkautschuk, synthetischem Polyisopren, Polybutadien und Styrol-Butadien-Copolymer. Diese Dienelastomere lassen sich gut zu der erfindungsgemäßen Kautschukmischung verarbeiten und zeigen keine Unverträglichkeiten mit dem Mineralölweichmacher und dem Rapsöl.

Bei dem Styrol-Butadien-Copolymer kann es sich um lösungspolymerisiertes Styrol-Butadien-Copolymer (S-SBR) mit einem Styrolgehalt von ca. 15 bis 45 Gew.-% handeln, welches zum Beispiel unter Verwendung von Lithiumalkylen in organischem Lösungsmittel hergestellt werden kann. Der Einsatz von S-SBR z. B. in Laufstreifen von Reifen mit Kieselsäure als Füllstoff bietet die Vorteile von verringertem Rollwiderstandes und Wärmeaufbau bei dynamischer Wechselbeanspruchung (Heat-build-up) aufgrund geringerer Hysterese. Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wäßriger Emulsion erhalten wurden, verwendet werden. E-SBR in Mischungen kann im Vergleich zu S-SBR Verbesserungen bei der Verarbeitung mit sich bringen.

Enthält die Kautschukmischung als Dienelastomer Polybutadien, kann es sich dabei sowohl um cis-1,4- als auch um Vinyl-Polybutadien (40-90 mol% Vinyl-Gehalt) handeln. Bevorzugt ist die Verwendung von cis-1,4-Polybutadien mit einem cis-1,4 Anteil größer 90 mol%, welches z. B. durch Lösungspolymerisation in Anwesenheit von Katalysatoren vom Typ der seltenen Erden hergestellt werden kann. Solche cis-1,4-Polybutadiene besitzen niedrige Glastemperaturen, was sich z. B. bei daraus hergestellten Laufstreifen von Reifen positiv auf Rollwiderstand, Abrieb und Wintereigenschaften auswirkt.

Außerdem kann die Kautschukmischung als Dienelastomer Polyisopren enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 mol%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk um ein solches cis-1,4 Polyisopren, der cis-1,4 Polyisopren-Anteil im Naturkautschuk ist größer 99 mol%. Mit Naturkautschuk läßt sich das Verarbeitungsverhalten verbessern und Rohfestigkeit, Konfektionsklebrigkeit, Kerbfestigkeit und Weiterreißfestigkeit der Vulkanisate nehmen zu.

Gemäß einer bevorzugten Ausführungsform der Erfindung beträgt das Gewichtsverhältnis von feinverteilter, gefällter Kieselsäure zu Ruß in der Kautschukmischung 1:1 bis 20:1. Es handelt sich dabei um Mischungen mit hohem Kieselsäuregehalt, wobei solche Mischungen verwendet für Reifenlaufstreifen Vorteile im Rollwiderstand und beim Bremsen mit ABS bringen.

Erfindungsgemäß kann grundsätzlich jede feinverteilte, gefällte Kieselsäure eingesetzt werden, wie sie üblicherweise bei der Herstellung von Kautschukmischungen verwendet wird und die bei dem auf diesem Gebeit tätigen Fachmann als bekannt vorausgesetzt werden kann. Es werden aber bevorzugt solche Kieselsäuren eingesetzt, die eine Stickstoff-Oberfläche (BET-Oberfläche) (gemäß ISO 5794/Annex D) von 35 bis 350 m²/g, vorzugsweise von 100 bis 250 m²/g, eine CTAB-Oberfläche (gemäß ASTM D 3765) von 30 bis 350 m²/g, vorzugsweise von 100 bis 250 m²/g, ein Porenvolumen (gemäß DIN 66133) von 0,2 bis 3,4 mL/g, vorzugsweise von 0,7 bis 1,7 mUg, einen mittleren Teilchendurchmesser von 10 bis 150 µm, vorzugsweise 10 bis 100 µm, und eine DBP-Zahl (gemäß ASTM D 2414) von 50 bis 300 mL/100 g, vorzugsweise von 150 bis 250 mL/100 g, besitzen. Als Kieselsäuren können somit z. B. jene des Typs VN3 (Handelsname) der Firma Degussa als auch hoch dispergierte Kieselsäuren, so genannte HD-Kieselsäuren, (z. B. Ultrasil 7000 der Firma Degussa) zum Einsatz kommen.

Zur Verbesserung der Verarbeitbarkeit und zur Anbindung der Kieselsäure an den Kautschuk ist es üblich Silan-Kupplungsagenzien in Kautschukmischungen einzusetzen. Die Silan-Kupplungsagenzien reagieren mit den oberflächlichen Silanolgruppen der Kieselsäure während des Mischen des Kautschuks bzw. der Kautschukmischung (in situ) oder bereits vor der Zugabe der Kieselsäure zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit dem Polymer eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagens z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Polysulfiden mit unterschiedlichen Gehalten an den verschiedenen Polysulfiden, verwendet werden. TESPT kann dabei beispielsweise auch als Gemisch mit Industrieruß (Handelsname X50S der Firma Degussa) zugesetzt werden. Die Silan-Kupplungsagenzien werden in Mengen von 0,2 bis 30 Gewichtsteilen, vorzugsweise 1 bis 15 Gewichtsteilen, bezogen auf 100 Gewichtsteile Kieselsäure eingesetzt, da dann eine optimale Anbindung der Kieselsäure an den oder die Kautschuke erfolgen kann.

Als Ruße können in der erfindungsgemäßen Kautschukmischung alle dem Fachmann bekannten Ruße eingesetzt werden, die folgende Charakteristika aufweisen: Dibutylphthalat-Zahl (DBP-Zahl, gemäß ASTM D 2414) 90 bis 200 mL/100 g, CTAB-Zahl (gemäß ASTM D 3765) von 80 bis 170 m²/g, lodzahl von 10 bis 250 g/kg (gemäß ASTM D 1510).

Als weitere Füllstoffe können der erfindungsgemäßen Kautschukmischung alle aus dem Stand der Technik bekannten Füllstoffe zugemischt werden, dabei sind beispielsweise Aluminiumoxide, Alumosilicate, Kreide, Stärke und Magnesiumoxid zu nennen.

Gemäß einer bevorzugten Ausführungsform der Erfindung enthält die Kautschukmischung 10 bis 80 phr feinverteilte, gefällte Kieselsäure und 1 bis 60 phr Ruß.

Des Weiteren kann die erfindungsgemäße Kautschukmischung übliche Zusatzstoffe in üblichen Gewichtsteilen enthalten. Zu diesen Zusatzstoffen zählen Alterungsschutzmittel, wie z. B. N-Phenyl-N'-(1,3-dimethylbutyl)-p-phenylendiamin (6PPD), N-Isopropyl-N'phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Aktivatoren, wie z. B. Zinkoxid und Fettsäuren wie Stearinsäure, und Wachse sowie Mastikationshilfsmittel, wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Schwefel oder Schwefelspender werden im letzten Mischungschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen wie Vulkanisationsbeschleuniger, Vulkanisationsverzögerer und Vulkanisationsaktivatoren in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid (CBS), Guanidinbeschleuniger wie z. B. N,N'-Diphenylguanidin (DPG), Dithiocarbamatbeschleuniger wie z. B. Zinkdibenzyldithiocarbamat, Disulfide. Die Beschleuniger können auch in Kombination miteinander eingesetzt werden, wobei sich synergistische Effekte ergeben können.

Die Herstellung der erfindungsgemäßen Kautschukmischung erfolgt, indem zunächst in einer oder mehreren Mischstufen zumindest ein Dienelastomer, feinverteilte, gefällte Kieselsäure, Ruß, zumindest ein Mineralölweichmacher und zumindest ein Glycerid und/oder ein Faktis, zumindest ein Silan-Kupplungsagens sowie die üblicherweise verwendeten Zusätze mit Ausnahme des Vulkanisationssystems (Schwefel bzw. Schwefelspender und Beschleuniger) in einer dem Fachmann bekannten Mischapparatur, z. B. einem Innenmischer, bei Temperaturen bis zu 180 °C vermischt werden. In dieser ersten Mischstufe sollte eine Temperatur von wenigstens 130 °C und vorzugsweise eine Temperatur von 145 bis 170 °C eingestellt werden.
Die Bestandteile der Mischung lassen sich zügig und problemlos zu einer homogenen Mischung verarbeiten. Anschließend erfolgt das Zumischen des Vulkanisationssytems bei Temperaturen unterhalb der Vulkanisationstemperatur.
Das Verfahren kann während des Mischens ferner auch so geführt werden, dass das Gemisch zunächst auf die vorgegebene Temperatur erwärmt und dann wieder auf eine Temperatur unterhalb der Vulkanisationstemperatur abgkühlt wird. Dieser Zyklus ist wenigstens einmal zu durchlaufen und kann gegebenenfalls auch mehrfach wiederholt werden.
Dann wird die Kautschukmischung weiterverarbeitet z. B. durch einen Extrusionsvorgang und in die entsprechende Form z. B. eines Laufstreifenrohlings gebracht. Ein so erzeugter Laufstreifenmischungsrohling wird bei der Herstellung des Reifenrohlings, insbesondere Fahrzeugluftreifenrohlings, wie bekannt aufgelegt.
Nach der Vulkanisation weisen die erhaltenen Produkte (Gummiprodukte) die Vorteile auf, dass schwarze Markierungen durch Abrieb und dunkle Verfärbungen von Oberflächen durch längeren Kontakt des Produktes mit diesen Oberflächen nicht auftreten. Die vulkanisierten Kautschukmischungen können dabei z. B. in Fahrzeugluftreifen, Tranportbändern, Antriebsriemen, Dichtungen, Schläuchen und Schuhsohlen Verwendung finden. Gleichzeitig weisen die Vulkanisationsprodukte, beispielsweise Reifen, gegenüber den Produkten aus bekannten Kautschukmischugen keine Nachteile in den physikalischen Eigenschaften auf. Bei Reifen ist es unerheblich, ob der gesamte Laufstreifen aus einer einzigen Mischung hergestellt worden ist oder z. B. einen Cap- und Base-Aufbau aufweist, denn wichtig ist, dass zumindest die mit der Fahrbahn in Berührung kommende Fläche oder ein Teil dieser Fläche aus der erfindungsgemäßen Kautschukmischung hergestellt worden ist.

Die Erfindung soll nun anhand von einigen Ausführungsbeispielen, die in den Tabellen 1 bis 3 zusammengefasst sind, näher erläutert werden, ohne jedoch auf diese Beispiele beschränkt zu sein.

Bei sämtlichen in den Tabellen 1 bis 3 enthaltenen Mischungsbeispielen sind die angebenen Mengenangaben Gewichtsteile, die auf 100 Gewichtsteile Gesamtkautschuk bezogen sind (phr).

Bei den mit (V) gekennzeichneten Mischungen 1, 4 und 7 handelt es sich um Vergleichsmischungen mit einem aromatischen Prozessöl und Ruß. Bei den mit (V) gekennzeichneten Mischungen 2, 5 und 8 handelt es sich um Vergleichsmischungen mit einem aromatischen Prozessöl und Ruß und Kieselsäure. Die mit (E) gekennzeichneten Mischungen 3, 6 und 9 sind die erfindungsgemäßen Mischungen mit einem Mineralölweichmacher, der einen Gehalt an polycyclischen aromatischen Verbindungen bestimmt mit dem DMSO-Extrakt nach der IP 346 Methode von weniger als 3 Gew.-% bezogen auf das Gesamtgewicht des Mineralölweichmachers und eine Glasübergangstemperatur unterhalb von -45 °C aufweist, und Rapsöl sowie Kieselsäurezu-Ruß-Verhältnissen zwischen 1:2 bis 20:1. Die Mischungen 1 bis 3, 4 bis 6 und 7 bis 9 bilden Gruppen, innerhalb derer zu vergleichen ist, wobei innerhalb der Gruppen die einzelnen Beispiele die gleiche Polymerzusammnensetzung aufweisen. Die Bestandteile aller Mischungen 1 bis 9 ließen sich gut zu einer homogenen Mischung verarbeiten.

Aus sämtlichen Mischungen wurden Prüfkörper durch 20-minütige Vulkanisation in einer Presse bei 160 °C hergestellt und mit diesen Prüfkörpern für die Kautschukindustrie typische Materialeigenschaften bestimmt. Für die Tests an Prüfkörpern wurden folgende Testverfahren angewandt:
- Zugfestigkeit bei Raumtemperatur gemäß DIN 53 504
- Spannungswert 300 % bei Raumtemperatur gemäß DIN 53 504
- Reißdehnung bei Raumtemperatur gemäß DIN 53 504
- Shore-A-Härte bei Raumtemperatur gemäß DIN 53 505
- Rückprallelastizität bei Raumtemperatur gemäß DIN 53 512
- Abrieb gemäß DIN 53 516

Des Weiteren wurden die Vulkanisatprüfkörper daraufhin untersucht, ob sie beim Reiben über eine Oberfläche, z. B. beim Reiben über ein Hochglanzpapier, unerwünschte schwarze Markierungen zurücklassen und ob sie bei längerem Kontakt über einige Tage bei Raumtemperatur auf Oberflächen Flecken hinterlassen (++ bedeutet: Markierungen und Flecken wurden beobachtet, + bedeutet: schwache Markierungen wurden beobachtet, -- bedeutet: es wurden keine Markierungen und Flecken beobachtet).

**Tabelle 1**

| **Bestandteile** | **Einheit** | **1(V)** | **2(V)** | **3(E)** | **4(V)** | **5(V)** | **6(E)** |
|---|---|---|---|---|---|---|---|
| Naturkautschuk | phr | 80,0 | 80,0 | 80,0 | - | - | - |
| E-SBR^{a} | phr | - | - | - | 80,0 | 80,0 | 80,0 |
| BR^{b} | phr | - | - | - | 20,0 | 20,0 | 20,0 |
| S-SBR^{c} | phr | 20,0 | 20,0 | 20,0 | - | - | - |
| Ruß N121 | phr | 55,0 | 5,0 | 5,0 | 70,0 | 5,5 | 5,5 |
| Kieselsäure^{d} | phr | - | 50,0 | 50,0 | - | 55,0 | 55,0 |
| Aromatisches Prozessöl^{e} | phr | 22,0 | 22,0 | - | 32,0 | 32,0 | - |
| Mineralölweichmacher^{f} | phr | - | - | 16,0 | - | - | 27,0 |
| Rapsöl | phr | - | - | 6,0 | - | - | 5,0 |
| TESPT^{g} | phr | - | 5,0 | 5,0 | - | 5,5 | 5,5 |
| Zinkoxid | phr | 3,0 | 3,0 | 3,0 | 2,5 | 2,5 | 2,5 |
| Stearinsäure | phr | 1,0 | 1,0 | 1,0 | 1,0 | 1,0 | 1,0 |
| Alterungsschutzmittel IPPD | phr | 1,0 | 1,0 | 1,0 | 1,0 | 1,0 | 1,0 |
| Paraffinwachs | phr | 1,0 | 1,0 | 1,0 | 1,0 | 1,0 | 1,0 |
| DPG | phr | - | 1,2 | 1,2 | 0,4 | 0,6 | 0,6 |
| CBS | phr | 1,8 | 1,6 | 1,6 | 1,3 | 1,5 | 1,5 |
| Schwefel | phr | 1,2 | 1,4 | 1,4 | 1,9 | 2,0 | 2,0 |

| **Eigenschaften** | | | | | | | |
|---|---|---|---|---|---|---|---|
| Zugfestigkeit bei RT | N/mm² | 17,5 | 18,9 | 18,1 | 16,4 | 16,9 | 16,2 |
| Spannungswert 300 % | N/mm² | 8,2 | 8,3 | 8,5 | 6,2 | 6,3 | 6,5 |
| Reißdehnung bei RT | % | 480 | 470 | 469 | 460 | 465 | 459 |
| Shore-A-Härte bei RT | Shore A | 64 | 64 | 65 | 62 | 63 | 63 |
| Rückprallelastizität bei RT | % | 42 | 41 | 42 | 34 | 33 | 35 |
| DIN-Abrieb | mm³ | 119 | 125 | 126 | 96 | 105 | 101 |
| Markierung/Spur auf Untergrund | | ++ | + | -- | ++ | + | -- |
| Fleckenbildung bei Kontakt mit Oberfläche | | ++ | ++ | -- | ++ | ++ | -- |

**Tabelle 2**

| **Bestandteile** | **Einheit** | **7(V)** | **8(V)** | **9(E)** |
|---|---|---|---|---|
| Naturkautschuk | phr | - | - | - |
| E-SBR^{a} | phr | 100,0 | 100,0 | 100,0 |
| BR^{b} | phr | - | - | - |
| S-SBR^{c} | phr | - | - | - |
| Ruß N121 | phr | 75,0 | 6,0 | 6,0 |
| Kieselsäure^{d} | phr | - | 60,0 | 60,0 |
| Aromatisches Prozessöl^{e} | phr | 34,0 | 34,0 | - |
| Mineralölweichmacher^{f} | phr | - | - | 26,0 |
| Rapsöl | phr | - | - | 8,0 |
| TESPT^{g} | phr | - | 6,0 | 6,0 |
| Zinkoxid | phr | 2,5 | 2,5 | 2,5 |
| Stearinsäure | phr | 1,0 | 1,0 | 1,0 |
| Alterungsschutzmittel IPPD | phr | 1,0 | 1,0 | 1,0 |
| Paraffinwachs | phr | 1,0 | 1,0 | 1,0 |
| DPG | phr | 0,2 | 0,8 | 0,8 |
| CBS | phr | 1,3 | 1,4 | 1,4 |
| Schwefel | phr | 2,0 | 2,1 | 2,1 |

| **Eigenschaften** | | | | |
|---|---|---|---|---|
| Zugfestigkeit bei RT | N/mm² | 14,5 | 14,3 | 14,2 |
| Spannungswert 300 % | N/mm² | 6,1 | 6,4 | 6,3 |
| Reißdehnung bei RT | % | 504 | 510 | 517 |
| Shore-A-Härte bei RT | Shore A | 63 | 62 | 64 |
| Rückprallelastizität bei RT | % | 29 | 28 | 30 |
| DIN-Abrieb | mm³ | 110 | 107 | 109 |
| Markierung/Spur auf Untergrund | | ++ | + | -- |
| Fleckenbildung bei Kontakt mit Oberfläche | | ++ | ++ | -- |

| | | | | |
|---|---|---|---|---|
| a SBR 1500, Bayer AG, Deutschland | | | | |
| b CB10, Bayer AG, Deutschland | | | | |
| c Calprene 1204, Repsol, Spanien | | | | |
| d Ultrasil VN3, Degussa AG, Deutschland | | | | |
| e Mobilsol 30, Mobil, Großbritannien | | | | |
| f Catenex SNR, Shell AG, Deutschland | | | | |
| g Si69, Degussa AG, Deutschland | | | | |

Aus den Tabellen 1 und 2 wird ersichtlich, dass die Vulkanisate aus den erfindungsgemäßen Kautschukmischungen den Vergleichsmischungen in ihren physikalischen Eigenschaften in Rahmen der Messgenauigkeit um nichts nachstehen. Die Mischungen 3, 6 und 9 weisen aber im Gegensatz zu den Vergleichsmischungen keine Markierungen durch Abrieb auf dem Untergrund und keine Fleckenbildung bei längerem Kontakt mit der Oberfläche auf. Dies wird erst durch die erfindungsgemäße Kombination von dem speziellen Mineralölweichmacher mit Rapsöl und dem speziellen Verhältnis von Kieselsäure zu Ruß erreicht. Der alleinige Austausch von Teilen des Rußes gegen Kieselsäure, wie in den Beispielen 2, 5 und 8 dargestellt, löst nicht die erfindungsgemäße Aufgabe.

Werden Reifenlaufstreifen aus den erfindungsgemäßen Mischungen hergestellt, zeigen die Reifen z. B. keine schwarzen Bremsspuren. Die Reifen können auch ohne Probleme auf hellen Untergründen gelagert oder abgestellt werden, ohne dass sie Flecken auf dem Boden hinterlassen. Die physikalischen Eigenschaften des Reifens werden im Vergleich zu Reifen aus herkömmlichen Mischungen nicht verschlechtert. Um Letzteres zu zeigen wurden z. B. Reifenversuche mit Fahrzeugluftreifen der Dimensionen 185/65 R 14 Q und 175/70 R 13 Q durchgeführt, deren Laufstreifen aus herkömmlichen (Reifen 10 und 12) und erfindungsgemäßen (Reifen 11 und 13) Mischungen hergestellt waren. Die Mischungszusammensetzungen mit den zu vergleichenden Bestandteilen und die Reifenergebnisse sind in Tabelle 3 dargestellt. Die Mischungen enthielten übliche Vernetzungschemikalien und Alterungsschutzmittel. Die Reifeneigenschaften von Reifen mit einem Laufstreifen aus einer herkömmlichen Mischung wurden gleich 100 gesetzt, Werte größer als 100 bedeuten eine Verbesserung in der entsprechenen Eigenschaft (rating).

**Tabelle 3**

| **Reifenversuch** | | **10** | **11** | **12** | **13** |
|---|---|---|---|---|---|
| Reifendimension | | 185/65 R 14Q | 185/65 R 14Q | 175/70 R 13Q | 175/70 R 13Q |
| **Laufstreifenzusammensetzung** | **Einheit** | | | | |
| Naturkautschuk | phr | 70 | 70 | 66 | 66 |
| E-SBR^{a} | phr | 15 | 15 | 18 | 18 |
| BR^{b} | phr | 15 | 15 | 16 | 16 |
| Ruß N339 | phr | 65 | 60 | 58 | 58 |
| Kieselsäure^{d} | phr | 20 | 30 | 20 | 30 |
| Aromatisches Prozessöl^{e} | phr | 41,625 | - | 40,75 | - |
| Mineralölweichmacher^{f} | phr | - | 41,625 | - | 40,75 |
| Rapsöl | phr | 5 | 5 | 10 | 10 |
| TESPT^{g} | phr | 4 | 4 | 4 | 4 |

| **Eigenschaften aus Reifenversuch** | | | | | |
|---|---|---|---|---|---|
| Nassbremsen mit ABS | | 100 | 101 | 100 | 101 |
| Rollwiderstand | | 100 | 103 | 100 | 103 |
| Wintereigenschaften | | 100 | 102 | 100 | 102 |

Bei den Reifen mit den erfindungsgemäßen Mischungen, also mit dem speziellem Mineralölweichmacher, mit dem Rapsöl und mit der beanspruchten Verhältnis von Kieselsäure zu Ruß, konnte eine Verbesserung in der Reifeneigenschaften Nassbremsen mit ABS, Rollwiderstand und Wintereigenschaften verzeichnet werden. Gegenüber dem alleinigen Einsatz von Rapsöl mit einem aromatischen Prozessöl und einem Gewichtsverhältnis von Kieselsäure zu Ruß, welches außerhalb des erfindungsgemäßen Bereiches vom 1:2 bis 20:1 liegt, bringen die erfindungsgemäßen Mischungen demnach neben der Vermeidung von Fleckbildung und Markierungen durch Abrieb noch zusätzliche Vorteile in den Reifeneigenschaften.

## Patentansprüche

1. Schwefelvernetzbare Kautschukmischung ohne aromatische Prozessöle enthaltend zumindest ein Dienelastomer, als Füllstoffe zumindest feinverteilte, gefällte Kieselsäure und Ruß, Weichmacher, zumindest ein Silan-Kupplungsagens sowie weitere übliche Zusatzstoffe,
**dadurch gekennzeichnet, dass**
- sie als Weichmacher 5 bis 60 phr (Gewichtsteile bezogen auf 100 Gewichtsteile der Gesamtkautschukmasse) zumindest eines Mineralölweichmachers, der einen Gehalt an polycyclischen aromatischen Verbindungen bestimmt mit dem DMSO-Extrakt nach der IP 346 Methode von weniger als 3 Gew.-% bezogen auf das Gesamtgewicht des Mineralölweichmachers und eine Glasübergangstemperatur unterhalb von -45 °C aufweist, und 1 bis 20 phr zumindest eines Glycerids und/oder eines Faktis enthält und
- das Gewichtsverhältnis von feinverteilter, gefällter Kieselsäure zu Ruß in der Kautschukmischung 1:2 bis 20:1 beträgt.

2. Kautschukmischung nach Anspruch 1, **dadurch gekennzeichnet, dass** das Glycerid Rapsöl ist.

3. Kautschukmischung nach zumindest einem der vorhergehenden Ansprüche, **dadurch gekennzeichnet, dass** das Dienelastomer bzw. die Dienelastomere ausgewählt ist bzw. sind aus der Gruppe bestehend aus Naturkautschuk, synthetischem Polyisopren, Polybutadien und Styrol-Butadien-Copolymer.

4. Kautschukmischung nach zumindest einem der vorhergehenden Ansprüche, **dadurch gekennzeichnet, dass** das Gewichtsverhältnis von feinverteilter, gefällter Kieselsäure zu Ruß in der Kautschukmischung 1:1 bis 20:1 beträgt.

5. Kautschukmischung nach zumindest einem der vorhergehenden Ansprüche, **dadurch gekennzeichnet, dass** die feinverteilte, gefällte Kieselsäure eine Stickstoff-Oberfläche von 35 bis 350 m²/g und ein Porenvolumen von 0,2 bis 3,4 mUg besitzt.

6. Kautschukmischung nach zumindest einem der vorhergehenden Ansprüche, **dadurch gekennzeichnet, dass** sie 0,2 bis 30 Gew.-Teile Silan-Kupplungsagens bezogen auf 100 Gew.-Teile Kieselsäure enthält.

7. Kautschukmischung nach zumindest einem der vorhergehenden Ansprüche, **dadurch gekennzeichnet, dass** sie 10 bis 80 phr Kieselsäure und 1 bis 60 phr Ruß enthält.

8. Verfahren zur Herstellung der Kautschukmischung, wie in zumindest einem der Ansprüche 1 bis 7 definiert, **gekennzeichnet durch** folgende Schritte:
1) Mischen von zumindest einem Dienelastomer, feinverteilter, gefällter Kieselsäure, Ruß, zumindest einem Mineralölweichmacher und zumindest einem Glycerid und/oder einem Faktis, zumindest einem Silan-Kupplungsagens sowie der üblicherweise verwendeten Zusätze mit Ausnahme des Vulkanisationssystems unter gleichzeitigem Erwärmen der Zusammensetzung auf eine Temperatur bis zu 180 °C,
2) Zumischen des Vulkanisationssytems bei Temperaturen unterhalb der Vulkanisationstemperatur,
wobei das Mischen vorzugsweise wenigstens einen aufeinander folgenden Erwärmungs- und Abkühlungszyklus umfasst.

9. Gummiprodukt, insbesondere Laufstreifen eines Reifens, enthaltend die mit Schwefel vulkanisierte Kautschukmischung, wie in zumindest einem der Ansprüche 1 bis 7 definiert.

10. Reifen enthaltend einen Reifenlaufstreifen, der zumindest zum Teil aus einer mit Schwefel vulkanisierten Kautschukmischung nach zumindest einem der Ansprüche 1 bis 7 besteht.

## Claims

1. Sulphur-cross-linkable rubber mixture without aromatic process oils, said mixture containing at least one diene elastomer, at least finely divided, precipitated silica and carbon black as fillers, plasticisers, at least one silane coupling agent as well as additional conventional additives, **characterised in that**
- it contains, as the plasticisers, 5 to 60 phr (parts by weight relative to 100 parts by weight of the total rubber composition) of at least one mineral oil plasticiser, which has a content of polycyclic aromatic compounds, determined with the DMSO extract according to the IP 346 method, of less than 3 % by wt. relative to the total weight of the mineral oil plasticiser and a glass transition temperature of less than -45° C, and 1 to 20 phr of at least one glyceride and/or one rubber substitute, and
- the weight ratio of finely divided, precipitated silica to carbon black in the rubber mixture is 1:2 to 20:1.

2. Rubber mixture according to claim 1, **characterised in that** the glyceride is rapeseed oil.

3. Rubber mixture according to at least one of the preceding claims, **characterised in that** the diene elastomer or respectively the diene elastomers is or are selected from the group comprising natural rubber, synthetic polyisoprene, polybutadiene and styrene/butadiene copolymer.

4. Rubber mixture according to at least one of the preceding claims, **characterised in that** the weight ratio of finely divided, precipitated silica to carbon black in the rubber mixture is 1:1 to 20:1.

5. Rubber mixture according to at least one of the preceding claims, **characterised in that** the finely divided, precipitated silica has a nitrogen surface area of 35 to 350 m²/g and a pore volume of 0.2 to 3.4 mL/g.

6. Rubber mixture according to at least one of the preceding claims, **characterised in that** it contains 0.2 to 30 parts by wt. silane coupling agent relative to 100 parts by wt. silica.

7. Rubber mixture according to at least one of the preceding claims, **characterised in that** it contains 10 to 80 phr silica and 1 to 60 phr carbon black.

8. Method of producing the rubber mixture as defined in at least one of claims 1 to 7, **characterised by** the following steps:
1) mixing at least one dime elastomer, finely divided, precipitated silica, carbon black, at least one mineral oil plasticiser and at least one glyceride and/or a rubber substitute, at least one silane coupling agent as well as the conventionally used additives, with the exception of the vulcanisation system, whilst simultaneously heating the composition to a temperature of up to 180° C,
2) admixing the vulcanisation system at temperatures below the vulcanisation temperature,
the mixing process preferably including at least one heating cycle and one cooling-down cycle, which cycles follow each other.

9. Rubber product, more especially a tread strip of a tyre, containing the sulphur-vulcanised rubber mixture as defined in at least one of claims 1 to 7.

10. Tyre, containing a tyre tread strip, which is at least partially formed from a sulphur-vulcanised rubber mixture according to at least one of claims 1 to 7.

## Revendications

1. Mélange de caoutchouc réticulable avec du soufre, sans huiles de procédé aromatiques, contenant au moins un diène élastomère, comme charges au moins de l'acide silique précipité, finement divisé, et du noir de fumée, un plastifiant, au moins un agent de copulation à base de silane ainsi que d'autres additifs habituels,
**caractérisé**
- **en ce que** le mélange de caoutchouc contient, comme plastifiant, entre 5 phr et 60 phr (parties en poids par rapport à 100 parties en poids de la masse totale de caoutchouc) d'au moins un plastifiant à base d'huile minérale qui présente une teneur en composés aromatiques polycycliques, déterminée par l'extrait de DMSO, d'après la méthode IP 346, de moins de 3 % en poids par rapport au poids total du plastifiant à base d'huile minérale, et présentant une température de transition vitreuse inférieure à -45°C, le mélange de caoutchouc contenant entre 1 phr et 20 phr d'au moins un glycéride et/ou d'un caoutchouc factice, et
- **en ce que** la proportion de poids d'acide silique précipité, finement divisé, par rapport au noir de fumée dans le mélange de caoutchouc varie entre 1:2 et 20:1.

2. Mélange de caoutchouc selon la revendication 1, **caractérisé en ce que** le glycéride est de l'huile de colza.

3. Mélange de caoutchouc selon au moins l'une quelconque des revendications précédentes, **caractérisé en ce que** le diène élastomère ou les diènes élastomères est choisi ou sont choisis parmi le groupe se composant de caoutchouc naturel, de polylsoprène synthétique, de polybutadiène et d'un copolymère à base de styrène et de butadiène.

4. Mélange de caoutchouc selon au moins l'une quelconque des revendications précédentes, **caractérisé en ce que** la proportion de poids d'acide silique précipité, finement divisé, par rapport au noir de fumée dans le mélange de caoutchouc varie entre 1:1 et 20:1.

5. Mélange de caoutchouc selon au moins Tune quelconque des revendications précédentes, **caractérisé en ce que** l'acide silique précipité, finement divisé, a une surface d'azote comprise entre 35 m²/g et 350 m²/g et un volume poreux variant entre 0,2 mL/g et 3,4 mL/g.

6. Mélange de caoutchouc selon au moins Tune quelconque des revendications précédentes, **caractérisé en ce que** le mélange de caoutchouc contient entre 0,2 partie en poids et 30 parties en poids d'un agent de copulation à base de silane, par rapport aux 100 parties en poids d'acide silique.

7. Mélange de caoutchouc selon au moins Tune quelconque des revendications précédentes, **caractérisé en ce qu'**il contient entre 10 phr et 80 phr d'acide silique et entre 1 phr et 60 phr de noir de fumée.

8. Procédé de fabrication du mélange de caoutchouc comme défini dans au moins l'une des revendications 1 à 7, **caractérisé par** les étapes suivantes consistant :
1) à mélanger au moins un diène élastomère, de l'acide silique précipité finement divisé, du noir de fumée, au moins un plastifiant à base d'huile minérale et au moins un glycéride et/ou un caoutchouc factice, au moins un agent de copulation à base de silane ainsi que les additifs utilisés habituellement, à l'exception du système de vulcanisation, tout en chauffant simultanément la composition à une température de 180°C,
2) à mélanger le système de vulcanisation, à des températures inférieures à la température de vulcanisation,
où le mélange comprend de préférence au moins un cycle de chauffage et de refroidissement se produisant successivement.

9. Produit en caoutchouc, en particulier bande de roulement d'un pneumatique, contenant le mélange de caoutchouc vulcanisé avec du soufre, comme défini dans au moins Tune des revendications 1 à 7.

10. Pneumatique contenant une bande de roulement qui se compose au moins, en partie, d'un mélange de caoutchouc vulcanisé avec du soufre, selon au moins l'une des revendications 1 à 7.
